# FASCICULE DE BREVET EUROPEEN

(11) **EP 0 588 711 B1**
(45) Date de publication et mention de la délivrance du brevet: **04.12.1996**
(21) Numéro de dépôt: 93402238.5
(22) Date de dépôt: 14.09.1993
(51) Int. Cl.: B60S 1/38

(54) **Balai d'essuie-glace pour un essuie-glace de véhicule automobile**
Wischblatt für den Scheibenwischer eines Kraftfahrzeugs
Wiper blade for the windscreen wiper of a motor vehicle

(30) Priorité: 17.09.1992 FR 9211095
(43) Date de publication de la demande: 23.03.1994
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- EP-A- 0 442 234
- FR-A- 2 216 795
- FR-A- 2 265 585
- FR-A- 2 337 649

## Description

La présente invention concerne un balai d'essuie-glace, notamment pour un essuie-glace de véhicule automobile.

L'invention concerne plus particulièrement un balai d'essuie-glace du type comportant un lame d'essuyage et une structure articulée de support de la lame d'essuyage qui comporte au moins deux palonniers dont les extrémités longitudinales opposées sont reliées au bord supérieur de la lame d'essuyage de manière à supporter cette dernière en au moins quatre points alignés.

Une telle conception de la structure articulée de support de la lame d'essuyage est nécessaire pour la répartition de la force d'application exercée par le bras du balai d'essuie-glace.

La force d'application, ou force d'essuyage, est ainsi répartie en plusieurs points espacés longitudinalement le long de la lame d'essuyage d'une distance comprise entre environ 50 et 100 mm.

A titre d'exemple, comme illustré dans le document EP-A-0 442 234 selon un agencement classique, pour un balai d'essuie-glace dont la longueur de la lame d'essuyage est d'environ 500 mm, le bord supérieur de la lame d'essuyage est supporté en huit points alignés pour lesquels il est nécessaire de disposer d'une structure articulée de support comportant un étrier principal relié à l'extrémité du bras d'essuie-glace et dont chacune des extrémités longitudinales opposées supporte de manière articulée un palonnier intermédiaire, les extrémités longitudinales opposées de chaque palonnier intermédiaire supportant de manière articulée un palonnier secondaire de plus petite longueur dont les deux extrémités longitudinales opposées sont reliées au bord supérieur de la lame d'essuyage.

La structure de support articulée comporte donc de nombreuses pièces et notamment les composants nécessaires à la réalisation des six articulations relatives entre l'étrier principal, les deux palonniers intermédiaires et les quatre palonniers secondaires.

Il est donc souhaitable de pouvoir proposer une conception d'un balai d'essuie-glace dans laquelle la structure de support de la lame d'essuyage soit simplifiée et nécessite un nombre de composants réduit.

Dans ce but, l'invention propose un balai d'essuie-glace, notamment pour un essuie-glace de véhicule automobile, du type comportant une lame d'essuyage et une structure articulée de support de la lame d'essuyage constituée d'un étrier principal relié à l'extrémité d'un bras d'essuie-glace et de deux palonniers articulés tous les deux à l'une des extrémités longitudinales opposées de l'étrier principal et dont les extrémités longitudinales opposées sont reliées au bord supérieur de la lame d'essuyage de manière à supporter cette dernière en au moins quatre points, les deux palonniers étant de longueurs différentes et articulés autour d'un même axe d'articulation, la portion d'articulation du palonnier le plus long présentant en section transversale la forme d'un U comme illustré dans le document FR-A-2 216 795 caractérisé en ce que la portion d'articulation du palonnier le plus court est montée articulée entre les ailes latérales parallèles du palonnier le plus long et en ce que ladite portion d'articulation comporte deux flasques latéraux dont chacun est reçu entre les faces en vis-à-vis d'une aile latérale de la portion d'articulation du palonnier le plus long et d'une joue latérale de la portion d'extrémité de l'étrier principal.

Selon différents modes de réalisation de l'invention :
- l'axe d'articulation est constitué d'un tronçon de tige qui traverse les ailes latérales parallèles et la portion d'articulation montée en chape ;
- la portion d'articulation de l'un des deux palonniers est susceptible de se déplacer par rapport à la portion d'articulation de l'autre des deux palonniers selon une direction sensiblement perpendiculaire à l'axe commun d'articulation et à la direction longitudinale de la lame d'essuyage ;
- le balai d'essuie-glace comporte des moyens élastiques qui sollicitent les deux portions d'articulation l'une par rapport à l'autre, selon la direction de déplacement et dans le sens correspondant à leur éloignement mutuel ;
- l'une des deux portions d'articulation comporte au moins une lumière qui est orientée selon la direction de déplacement et qui reçoit le tronçon de tige de manière à permettre le déplacement relatif des deux portions d'articulation ;
- la structure de support comporte un étrier principal dont l'une au moins des extrémités supporte l'axe d'articulation commun aux deux palonniers ;
- l'extrémité de l'étrier principal présente, en section transversale, la forme d'un U et l'axe d'articulation commun aux deux palonniers est porté par les joues latérales parallèles de l'extrémité de l'étrier principal ;

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en élévation d'une extrémité longitudinale d'un étrier principal d'une structure de support réalisée conformément aux enseignements de l'invention et dont l'axe d'articulation porte deux palonniers ;
- la figure 2 est une vue en section à plus grande échelle selon la ligne 2-2 de la figure 1 ;
- la figure 3 est une vue schématique en perspective de la portion médiane d'articulation du palonnier le plus court ;
- les figures 4 et 5 sont des vues similaires à celles des figures 2 et 3 illustrant une variante de réalisation du palonnier le plus court.

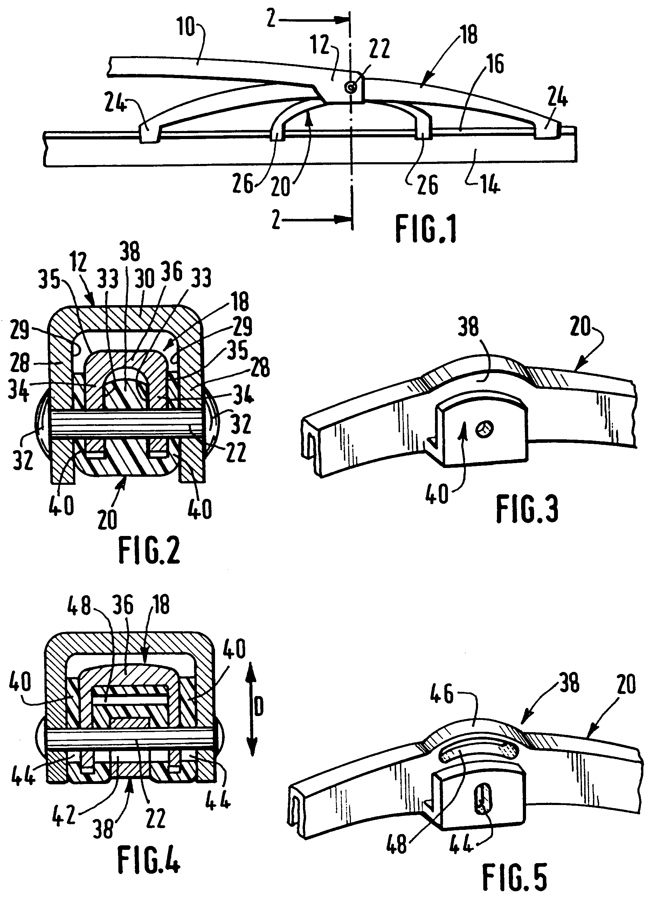

On a représenté à la figure 1 l'une des extrémités longitudinales opposées 12 d'un étrier principal 10 d'une structure de support d'une lame d'essuyage 14 d'un balai d'essuie-glace.

Le bord supérieur 16 de la lame d'essuyage 14 est relié à l'extrémité 12 de l'étrier principal 10 par l'intermédiaire de deux palonniers articulés 18 et 20.

Les deux palonniers 18 et 20 sont de longueurs différentes et sont articulés sur l'extrémité 12 autour d'un axe d'articulation unique et commun 22.

Dans le mode de réalisation illustré sur la figure 1, le palonnier 18 de plus grande longueur et le palonnier 20 de plus petite longueur présentent une symétrie de conception par rapport à un plan transversal perpendiculaire au plan de la figure passant par l'axe d'articulation 22.

Les deux extrémités longitudinales opposées 24 du palonnier le plus long 18 comportent, selon une technique connue, des griffes d'accrochage sur le bord supérieur 16 de la lame 14.

De la même manière, les extrémités longitudinales opposées 26 du palonnier le plus court 20 comportent des griffes d'accrochage sur le bord supérieur 16 de la lame d'essuyage 14.

Comme on peut le voir sur la figure 1, les griffes 24 et 26 assurent quatre points de support de la lame d'essuyage 14, et donc quatre points d'application de la force d'essuyage, régulièrement répartis le long du bord supérieur 16.

Comme on peut le voir sur la figure 2, l'extrémité 12 de l'étrier principal 10 présente en section transversale la forme d'un U renversé et comporte à cet effet deux joues latérales parallèles 28 qui sont reliées entre elles par un dos 30.

Les joues latérales 28 sont traversées par l'axe d'articulation commun 22 qui est réalisé sous la forme d'un tronçon de tige dont les extrémités axiales opposées 32 sont écrasées comme des têtes de rivets.

De la même manière, la portion médiane d'articulation du palonnier le plus long 18 présente en section transversale la forme d'un U renversé.

A cet effet, la portion d'articulation comporte deux ailes latérales parallèles 34 reliées entre elles par un dos 36.

Les ailes latérales 34 sont également traversées par l'axe d'articulation 22 de manière à assurer l'articulation du palonnier le plus long 18 par rapport à l'extrémité 12 de l'étrier principal.

Le palonnier le plus court 20 comporte une portion médiane d'articulation 38 qui se prolonge longitudinalement par les deux branches opposées du palonnier et qui est reçue entre les faces latérales intérieures 33 en vis-à-vis des ailes latérales 34 du palonnier le plus long 18.

La portion médiane d'articulation 38 est également traversée par l'axe 22 de manière à assurer l'articulation du palonnier 20 par rapport au palonnier le plus long 18 et par rapport à l'extrémité 12 de l'étrier principal.

Comme on peut le constater sur les figures 2 et 3, la portion médiane d'articulation 38 se prolonge latéralement par deux flasques latéraux 40 dont chacun est reçu entre la face intérieure en vis-à-vis 29 d'une joue latérale 28 de l'extrémité 12 de l'étrier principal et la face extérieure en vis-à-vis 35 d'une aile latérale 34 du palonnier 18.

Les flasques latéraux 40 assurent une fonction de centrage de la portion médiane d'articulation du palonnier 18 par rapport aux joues latérales 28 de l'extrémité 12 de l'étrier principal ainsi qu'une fonction de réduction des efforts de friction entre les joues latérales 28 de l'étrier principal et les ailes latérales 34 du palonnier le plus long 18.

En fonction des besoins d'absorption d'une éventuelle courbure du pare-brise ou de la vitre à essuyer, il est possible de réaliser chacun des palonniers le plus long ou le plus court de manière rigide et/ou flexible.

Il est par exemple possible de réaliser le palonnier 18 dans un matériau rigide et le palonnier le plus court 20 en matière plastique flexible.

On décrira maintenant le second mode de réalisation illustré aux figures 4 et 5.

Dans ce mode de réalisation, et afin de faciliter l'absorption des variations de galbe de la vitre à essuyer, il est prévu une possibilité de déplacement relatif du palonnier le plus court 20 par rapport au palonnier le plus long 18 selon une direction D perpendiculaire à l'axe d'articulation 22 et à la direction longitudinale de la lame d'essuyage 14.

A cet effet, la partie médiane d'articulation 38 du palonnier le plus court 20 et chacun des flasques latéraux 40 comportent une lumière, respectivement 42 et 44, orientée verticalement selon la direction D afin de permettre un débattement selon cette direction de la portion médiane 38 par rapport à l'axe 22.

Au voisinage de sa face supérieure 46 qui est en contact avec le dos 36 du palonnier 18, la portion médiane d'articulation 38 comporte un évidement débouchant 48 qui confère à la face supérieure 46 une structure de lame élastique déformable compressible selon la direction D.

La portion médiane 38 comporte ainsi des moyens de rappel élastique qui sollicitent, verticalement vers le bas en considérant la figure 4, la portion médiane 38 de l'étrier le plus court 20 par rapport à l'axe d'articulation 22.

La lame 46 est susceptible d'être comprimée élastiquement pour permettre un débattement vertical vers le haut du palonnier le plus court 20 par rapport au palonnier le plus long 18.

## Revendications

1. Balai d'essuie-glace, notamment pour un essuie-glace de véhicule automobile, du type comportant une lame d'essuyage (14) et une structure articulée de support de la lame d'essuyage (14) constituée d'un étrier principal (10) relié à l'extrémité d'un bras d'essuie-glace et de deux palonniers (18, 20) articulés tous les deux à l'une des extrémités longitudinales opposées (12) de l'étrier principal (10) et dont les extrémités longitudinales opposées (24, 26) sont reliées au bord supérieur (16) de la lame d'essuyage (14) de manière à supporter cette dernière en au moins quatre points, les deux palonniers (18, 20) étant de longueurs différentes et articulés autour d'un même axe d'articulation (22), la portion d'articulation du palonnier le plus long (18) présentant en section transversale la forme d'un U caractérisé en ce que la portion d'articulation (38) du palonnier le plus court (20) est montée articulée entre les ailes latérales parallèles (34) du palonnier le plus long (18) et en ce que ladite portion d'articulation (38) comporte deux flasques latéraux (40) dont chacun est reçu entre les faces en vis-à-vis (35, 29) d'une aile latérale de la portion d'articulation du palonnier le plus long (18) et d'une joue latérale (28) de la portion d'extrémité de l'étrier principal (10).

2. Balai d'essuie-glace selon la revendication 1, caractérisé en ce que l'axe d'articulation (22) est constitué d'un tronçon de tige qui traverse les ailes latérales (34) et la portion d'articulation (38).

3. Balai d'essuie-glace selon l'une quelconque des revendications précédentes, caractérisé en ce que la portion d'articulation (38) de l'un (20) des deux palonniers est susceptible de se déplacer par rapport à la portion d'articulation de l'autre (18) des deux palonniers selon une direction (D) sensiblement perpendiculaire à l'axe d'articulation (22) et à la direction longitudinale de la lame d'essuyage (14).

4. Balai d'essuie-glace selon la revendication 3, caractérisé en ce qu'il comporte des moyens élastiques qui sollicitent les deux portions d'articulation l'une par rapport à l'autre, selon ladite direction de déplacement (D) et dans le sens correspondant à leur éloignement mutuel.

5. Balai d'articulation selon l'une des revendications 3 ou 4 prises en combinaison avec la revendication 2, caractérisé en ce que l'une (38) des deux portions d'articulation comporte au moins une lumière (44, 46) qui est orientée selon ladite direction de déplacement (D) et qui reçoit le tronçon de tige (22) de manière à permettre ledit déplacement relatif des deux portions d'articulation.

6. Balai d'essuie-glace selon l'une quelconque des revendications précédentes, caractérisé en ce que la structure de support comporte un étrier principal (10) dont l'une au moins des deux extrémités longitudinales (12) supporte l'axe d'articulation (22) commun aux deux palonniers (18, 20).

7. Balai d'essuie-glace selon la revendication 6, caractérisé en ce que l'extrémité (12) de l'étrier principal (10) présente en section transversale la forme d'un U, et en ce que l'axe d'articulation (22) commun aux deux palonniers (18, 20) est porté par les joues latérales parallèles (28) de l'extrémité (12) de l'étrier principal (10).

## Claims

1. A screen wiper blade, especially for a motor vehicle screen wiper, of the type that includes a wiping strip (14) and an articulated structure, which supports the wiping strip (14) and which comprises a main yoke (10) connected to the end of a screen wiper arm, together with two stirrups (18, 20) which are both articulated on one of the opposed longitudinal end portions (12) of the main yoke (10), the opposed longitudinal ends (24, 26) of the stirrups being connected to the upper edge (16) of the wiping strip (14) so as to support the latter in at least four points, the two stirrups (18, 20) being of different lengths and being articulated about a commn articulation axis (22), with the articulating portion of the longer stirrup (18) having a U-shaped transverse cross section, characterised in that the articulating portion (38) of the shorter stirrup (20) is articulated between the parallel side wing portions (34) of the longer stirrup (18), and in that the said articulating portion (38) comprises two lateral wall portions (40), each of which is received between the surfaces (35, 29), facing each other, of a side wing portion of the articulating portion of the longer stirrup (18) and of a side portion (28) of the end portion of the main yoke (10).

2. A screen wiper blade according to Claim 1, characterised in that the articulation axis (22) is defined by a short bar extending through the side wing portions (34) of the articulating portion (38).

3. A screen wiper blade according to either one of the preceding Claims, characterised in that the articulating portion (38) of one (20) of the two stirrups is displaceable, with respect to the articulating portion of the other one (18) of the two stirrups, in a direction (D) which is substantially at right angles to the articulation axis (22) and to the longitudinal direction of the wiping strip (14).

4. A screen wiper blade according to Claim 3, characterised in that it includes resilient means which bias the two articulating portions with respect to each other in the said direction (D) of displacement and in the sense corresponding to their mutual separation.

5. An articulated blade according to Claim 3 or Claim 4, taken in combination with Claim 2, characterised in that one (38) of the two articulating portions includes at least one through aperture (44, 46) which is orientated in the said direction of displacement (D), and which receives the short bar (22) in such a way as to permit the said relative displacement of the two articulating portions.

6. A screen wiper blade according to any one of the preceding Claims, characterised in that the Support structure comprises a main yoke (10) in which at least one of the two longitudinal ends (12) of the main yoke supports the articulation axis (22) which is common to both stirrups (18, 20).

7. A screen wiper blade according to Claim 6, characterised in that the end portion (12) of the main yoke (10) has a U-shaped transverse cross section, and in that the articulation axis (22) which is common to both stirrups (18, 20) is carried by the parallel side portions (28) of the end portion (12) of the main yoke (10).

## Patentansprüche

1. Wischblatt, insbesondere für den Scheibenwischer eines Kraftfahrzeugs, in der Ausführung mit einem Wischergummi (14) und einer Gelenktragstruktur zur Halterung des Wischergummis (14), bestehend aus einem Hauptbügel (10), der mit dem Ende eines Scheibenwischerarms verbunden ist, und zwei Krallenbügeln (18, 20), die beide schwenkbar an einem der gegenüberliegenden Enden (12) des Hauptbügels (10) gelagert sind und deren gegenüberliegende Längsenden (24, 26) mit der Oberkante (16) des Wischergummis (14) verbunden sind, so daß sie diesen in wenigstens vier Punkten haltern, wobei die beiden Krallenbügel (18, 20) unterschiedliche Längen aufweisen und schwenkbar um eine gleiche Gelenkachse (22) gelagert sind, wobei der Gelenkabschnitt des längeren Krallenbügels (18) im Querschnitt eine U-Form aufweist, **dadurch gekennzeichnet,** daß der Gelenkabschnitt (38) des kürzeren Krallenbügels (20) schwenkbar zwischen den parallelen Seitenschenkeln (34) des längeren Krallenbügels (20) gelagert ist und daß der besagte Gelenkabschnitt (38) zwei Seitenstücke (40) umfaßt, die jeweils zwischen den gegenüberliegenden Flächen (35, 29) eines Seitenschenkels des Gelenkabschnitts des längeren Krallenbügels (18) und einer Seitenwand (28) des Endabschnitts des Hauptbügels (10) eingesetzt sind.

2. Wischblatt nach Anspruch 1 , **dadurch gekennzeichnet,** daß die Gelenkachse (22) aus einem Stift besteht, der durch die parallelen Seitenschenkel (34) und den Gelenkabschnitt (38) hindurchgeht.

3. Wischblatt nach einem der vorangehenden Ansprüche, **dadurch gekennzeichnet,** daß sich der Gelenkabschnitt (38) eines (20) der beiden Krallenbügel im Verhältnis zum Gelenkabschnitt (18) des anderen (18) der beiden Krallenbügel in einer Richtung (D) verschieben kann, die in etwa senkrecht zur Gelenkachse (22) und zur Längsrichtung des Wischergummis (14) verläuft.

4. Wischblatt nach Anspruch 3 , **dadurch gekennzeichnet,** daß es elastische Mittel umfaßt, welche die beiden Gelenkabschnitte im Verhältnis zueinander entlang der besagten Verschiebungsrichtung (D) und in Richtung ihrer Auseinanderbewegung beaufschlagen.

5. Wischblatt nach einem der Ansprüche 3 oder 4 in Kombination mit Anspruch 2 , **dadurch gekennzeichnet,** daß einer (38) der beiden Gelenkabschnitte wenigstens ein Schlitzloch (44, 46) umfaßt, das entlang der Verschiebungsrichtung (D) ausgerichtet ist und in das der Stift (22) eingesetzt wird, um die realtive Verschiebung der beiden Gelenkabschnitte zu ermöglichen.

6. Wischblatt nach einem der vorangehenden Ansprüche, **dadurch gekennzeichnet,** daß die Tragstruktur einen Hauptbügel (10) umfaßt, der an wenigstens einem seiner Längsenden (12) die gemeinsame Gelenkachse (22) der beiden Krallenbügel (18, 20) trägt.

7. Wischblatt nach Anspruch 6 , **dadurch gekennzeichnet,** daß das Ende (12) des Hauptbügels (10) im Querschnitt eine U-Form aufweist und daß die gemeinsame Gelenkachse (22) der beiden Krallenbügel (18, 20) an den parallelen Seitenwänden (28) des Endes (12) des Hauptbügels (10) angebracht ist.
